# EUROPEAN PATENT APPLICATION

(11) **EP 4 826 854 A1**
(43) Date of publication of application: **21.10.2026**
(21) Application number: 25171343.4
(22) Date of filing: 17.04.2025
(51) Int. Cl.: H01M 10/6557, H01M 10/613, H01M 10/6567, H01M 50/213, H01M 10/643, H01M 10/653

(54) **DEVICE FOR THERMAL MANAGEMENT OF BATTERY CELLS OF A BATTERY, BATTERY AND BATTERY SYSTEM**

(71) Applicant: Röchling Automotive SE, 68165 Mannheim (DE)
(72) Inventor: Cagol, Ivan, 38049 Altopiano della Vigolana (IT); Collatuzzo, Enrico, 39055 Laives (IT)
(74) Representative: Ullrich & Naumann PartG mbB

(57) **Abstract**

Device (1) for thermal management of battery cells (10) of a battery, comprising a first component (2) and a second component (3), attached to each other, wherein the first component (2) is made of a first material and wherein the second component (3) is made of a second material, and wherein the second material is more flexible than the first material, and wherein the first component (2) is adapted to provide a structural function for the device (1), and wherein the second component (3) is adapted to provide a thermal function with at least one fluid channel (4).

## Description

The present invention relates to a device for thermal management of battery cells of a battery, comprising a first component and a second component, attached to each other, wherein the first component is made of a first material and wherein the second component is made of a second material.

The present invention further relates to a battery comprising a plurality of battery cells.

The present invention further relates to a battery system comprising a battery and a battery management system.

Devices for thermal managements of battery cells are for instance known from EP 3 525 279 A1. EP 3 525 279 A1 discloses a battery pack with a flexible foil, which can be integrated with or coupled to a heat exchanging member, wherein the heat exchanging member is arranged to fit around the plurality of battery cells. The heat exchanging member can comprise means for guiding a cooling liquid there through for enhancing the cooling. The means for guiding a cooling liquid can be arranged in the form of a cooling circuit. In addition, a heat pipe system can be employed for cooling the battery cells of the battery pack.

One of the disadvantages however is that the flexible foil has to be elaborately placed between the different battery cells. A further disadvantage is that an inefficient thermal management of the battery cells is provided with non-contact areas in which the flexible foil is not in contact with a surface of the battery cells. A further disadvantage is that due to the foil structure, i.e. the small thickness, the thermal contact between the battery cells depends on the pressure of the cooling liquid inside the associated heat exchanging member and therefore can be limited.

To overcome these disadvantages EP 4 525 138 A1 discloses a device for thermal management of battery cells of a battery comprising at least one polymer element, comprising one or more polymers, in particular thermoplastic, wherein said at least one polymer element comprises at least one fluid channel having an inlet and an outlet, wherein said at least one fluid channel is adapted such to provide a fluid flow in at least one direction, preferably in at least two directions, preferably in at least three directions, parallel to a main direction of extension of said at least one polymer element, in particular wherein at least two of said at least three directions are parallel to each other.

However there is still need for a lightweight thermal management device providing an enhanced thermal management efficiency in particular without the use of thermal pastes and which can be easily dismounted.

One of the objectives of the present invention is therefore to provide a device for thermal management of battery cells of a battery, a battery and a battery system, which allow for an enhanced thermal management efficiency, in particular without the use of thermal pastes and which can be easily dismounted.

One of the further objectives of the present invention is to provide an alternative device for thermal management of battery cells of a battery, an alternative battery and an alternative battery system.

The afore mentioned objectives may be accomplished by an embodiment of the present invention providing a device for thermal management of battery cells of a battery, comprising a first component and a second component, attached to each other, wherein the first component is made of a first material and wherein the second component is made of a second material, and wherein the second material is more flexible than the first material, and wherein the first component is adapted to provide a structural function for the device, and wherein
the second component is adapted to provide a thermal function with at least one fluid channel.

The afore mentioned objectives may be accomplished by an embodiment of the present invention providing a battery comprising a plurality of battery cells and at least a device according to one of the claims 1-18.

The afore mentioned objectives may be accomplished by an embodiment of the present invention providing a battery system, comprising a battery according to claim 19 and a battery management system, said battery management system being adapted to control provisioning of a coolant or heating fluid via a coolant provisioning device for the device, preferably based on a temperature of the battery.

One of the advantages that may be achieved by the present invention is that an easy placement of the device respective the battery cells is enabled together with an easy recycling of the respective components. Further, a larger contact area of the surface for the thermal management of the batteries may be achieved. Due to the first and second component the device may provide structural and thermal function for a battery allowing for a reduced construction space.

Further features, advantages and preferred embodiments are disclosed or may become apparent in the following.

According to a preferred embodiment, the first material comprises at least one metal and/or wherein the second material comprises at least one polymer. This may allow for an enhanced trade-off between the structural and thermal function providing both functions in a sufficient manner.

According to a further preferred embodiment said device is provided in two shells, attached to each other, preferably materially bonded, preferably via welding. This may allow for an easy and cost-effective manufacturing of the device.

According to a further preferred embodiment the two shells are attached to each other in an area of the first component and in an area of the second component. This may allow for a reliable connection between the two shells, while still allow for an easy and cost-effective manufacturing.

According to a further preferred embodiment the first component has a wall for supporting one or more battery cells and wherein the second component has a wall for touching a battery cell at least in part, such that an increased fluid pressure of a fluid applied to the at least one fluid channel increases thermal performance for thermal management. For instance the contact surface can be increased and/or the pressure applied to the contact surface can be increased to enhance the thermal transfer between the battery and the fluid in the fluid channel.

According to a further preferred embodiment said at least one fluid channel has a rectangular cross-section. This may allow for an easy and cost-effective manufacturing while providing a shape of the cross-section for sufficient fluid flow.

According to a further preferred embodiment the second component of a shell has a U-shaped cross section. This may allow for an easy manufacturing of a shell and providing a fluid channel.

According to a further preferred embodiment at least two fluid channels are provided via at least one divider within the second component. This may allow for an increased flexibility in terms of fluid channels. For instance the divider enables separate fluid channels which can be subjected with a cooling fluid in different flow directions enhancing the thermal management of a battery cell.

According to a further preferred embodiment said at least one divider is arranged perpendicular to an axis of a battery cell. This may allow for an easy manufacturing of two or more fluid channels.

According to a further preferred embodiment said at least one divider is arranged such to provide fluid channels having the same size of the cross-sectional area. This may allow for an easy manufacturing of two or more fluid channels while enabling similar flow rates in these fluid channels.

According to a further preferred embodiment a wall of said at least one fluid channel to contact a battery cell comprises at least one recess facing away from the battery cell, preferably a plurality of recesses. This allows for a reduction of the internal volume of a fluid channel and the contact surface with a battery cell, while still ensuring sufficient thermal transfer from or to the battery cell.

According to a further preferred embodiment said at least one recess extends at least in part along said at least one fluid channel, preferably wherein a plurality of recesses are positioned above each other parallel to the axis of the battery cell. This may allow for a guidance of the fluid along the fluid channel without significantly increasing the flow resistance.

According to a further preferred embodiment said device provides at least one, preferably a plurality of mounting seats, for a side surface of a battery cell along the main direction of extension of the battery cell. This allows for a higher level of integration and flexibility of the device acting as a battery cell holder.

According to a further preferred embodiment said at least one mounting seat is shaped such that said mounting seat covers at least 20%, preferably at least 30%, preferably at least 40%, preferably at least 50%, preferably at least 60%, preferably at least 70%, preferably at least 80%, preferably at least 90%, preferably all of a circumferential surface of a battery cell when placed in said mounting seat. Due to the covering at least in part of a circumferential surface of a battery, an effective thermal management may be achieved.

According to a further preferred embodiment said device comprises curved walls extending along the at least one direction. This may allow for an effective transfer of thermal energy between e.g. a cylindrical shaped battery cell and the device. For instance, battery cells can be arranged along the main direction of extension with their symmetry axes perpendicular to the main direction of extension.

According to a further preferred embodiment said curved walls have concave form, in particular having a regular pattern of concave sections along the main direction of extension. This may allow for an adjacent arrangement of e.g. cylindrical battery cells.

According to a further preferred embodiment sides of said device opposite to each other along the main direction of extension have concave sections displaced from one another. This may allow for a space saving arrangement of e.g. cylindrical battery cells in different rows opposite of each other.

There are several ways how to design and further develop the teaching of the present invention in an advantageous way. To this end, it is to be referred to the patent claims subordinate to the independent claims on the one hand and to the following explanation of further embodiments of the invention by way of example, illustrated by the figures on the other hand. In connection with the explanation of the further embodiments of the invention by the aid of the figures, generally further embodiments and further developments of the teaching will be explained.

In the drawings
- Fig. 1: shows a cross-section of a battery and a device for thermal management according to an embodiment of the present invention;
- Fig. 2: shows a plain view onto the device for thermal management according to Fig. 1; and
- Fig. 3: shows a device for thermal management according to an embodiment of the present invention.

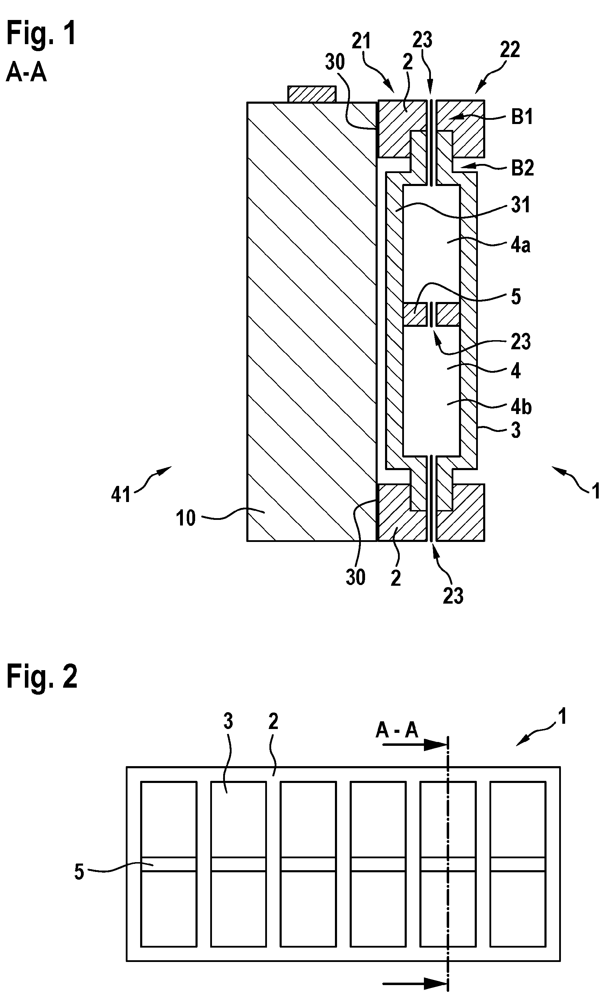

Fig. 1 shows a cross-section of a battery and a device for thermal management according to an embodiment of the present invention, and

Fig. 2 shows a plain view onto the device for thermal management according to Fig. 1.

Figure 1 shows on the left side a cylindrical battery cell 10. On the right side of the battery cell 10 a cooling device 1 is arranged. The cooling device 1 comprises two components, a first component 2 and a second component 3. The first component 2 is made of a material being more rigid than the material of the second component 3. The first component 2 provides mechanical stability of the cooling device 1 and is provided in form of a frame (see Fig. 2). Within the frame-shaped first component 2 the second component 3 is arranged and attached to the first component 2 in the upper and lower portion of the first component 2. The first component 2 and the second component 3 are further provided as two half-shells 21, 22 wherein each shell 21, 22 comprises an upper and lower part of the first component 2 with the second component 3 in between. The second component 3 is in each shell 21, 22 provided with a u-shaped cross-section so that by attaching the two shells 21, 22 together a fluid channel 4 is formed for guiding of a fluid inside.

The two shells 21, 22 are welded together by a welding connection 23 in an overlapping area B1, B2 of the first and second component 2, 3, i.e. in the lower and upper part of the first component 2.

In Fig. 1 a left side wall 30 of the first component 2 directly touches a side of a battery cell 10 providing mechanical support for the battery cell 10. A left side wall 31 of the second component 3 touches at least 50% of the side wall of the battery cell 10 and provides thermal transfer from the battery cell 10 to a cooling fluid within the fluid channel 4. The material of the second component 2 can be TPE, which is soft or a more rigid material like PA, PP, PK (polyketone). In particular "rigid" means that the material has a elastic modulus of more than 3 GPa, in particular more than 4 GPa, preferably more than 5 GPa, whereas "soft" means a material with an elastic modulus of 1 GPa and lower. Together the walls 30, 31 of the first and second component 2, 3 provide a mounting seat 41 for the battery cell 10.

When increasing the pressure of the cooling fluid within the fluid channel 4, the fluid pressure increases "goodness" of the contact between the wall 31 of the second component 3 resulting in a reduced thermal resistance and an increased thermal management performance.

Optionally the fluid channel 4 comprises a divider 5 dividing the fluid channel 4 into two separate fluid channels 4a, 4b allowing for flow of a cooling fluid in different directions within the cooling device 1. Further dividers are possible. The divider 5 may also comprise two parts each integrally formed with one of the two shells 21, 22 and welded together in the center.

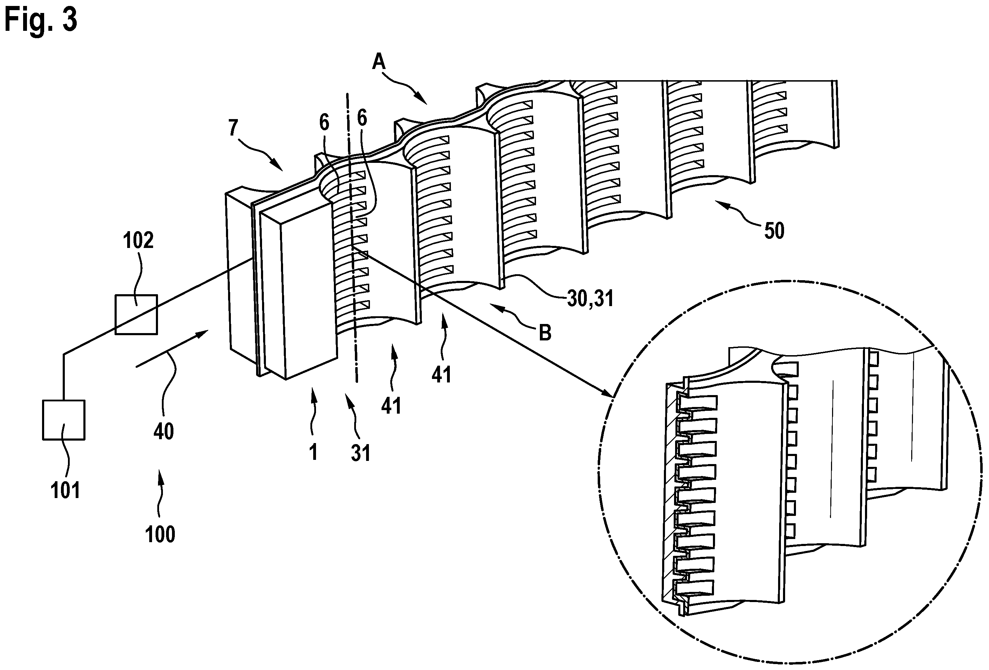

Fig. 3 shows a device for thermal management according to an embodiment of the present invention.

Figure 3 shows in a three-dimensional view a cooling device 1. Along the main direction of extension 40 the cooling device 1 comprises a plurality of concave forms as mounting seats 41 for battery cells which can cover at least 10%, preferably at least 20%, preferably at least 30%, preferably at least 40%, preferably at least 45% or half of the circumferential surface of a cylindrical shaped battery cell 10. When arranging a second cooling device 1 along the main direction 40 adjacent to the first cooling device 1, the mounting seats 41 of the two cooling devices 1 can cover up to 100% of the circumferential surface of a cylindrical shaped battery cell 10. The concave forms of the mounting seats 41, when arranging in a regular manner, form a pattern 50 wherein the mounting seats 41 on opposite sides A, B of the cooling device 1 are offset by a radius of the battery cell 10 along the main direction of extension 40.

The cooling device 1 is connected to a battery management system 101, which in turn is connected to a coolant provisioning device 102 connected to the fluid channel 4 to provide coolant fluid to the fluid channel 4 controlled by the battery management system 101. The battery management system 101 may comprise temperature sensors, pressure sensors or the like to monitor the operation status of a battery system 100 comprising the battery management system 101, the cooling device 1 and the coolant provisioning device 102.

Further the side walls 31 comprise a plurality of recesses 6 which extent along the side walls 31 and which are arranged parallel to each other, here on top of each other along the symmetry axis of a battery cell 10. In other words the walls 31 between the battery cell 10 and the snake-like cooling device 1 are emptied by the recesses 6 or grooves. This reduces the internal volume of the fluid channel 4 but also the contact surface with the battery cell 10 while still ensuring sufficient thermal exchange. The recesses 6 or grooves also create a mandatory passage for the flow of the fluid, in particular liquid and therefore also act as flow guides.

At least one embodiment may provide at least one of the following features and/or at least one of the following advantages:
- Easy and less cost-intensive manufacturing.
- Reduced construction space.
- Lower weight and sufficient stiffness.
- Reliable operation.
- High integration level.
- Flexibility in terms of functionality.
- Easy placement of the device respective the battery cells.
- A larger contact area of the surface for the thermal management.
- Flexible and sufficient thermal management.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

### List of reference signs

- 1: cooling device
- 2: first component
- 3: second component
- 4: fluid channel
- 4a, 4b: area
- 5: divider
- 6: recess
- 10: battery cell
- 21, 22: shell
- 23: welding connection
- B1, B2: area
- 30, 31: wall
- 40: main direction of extension
- 41: mounting seat
- 50: pattern
- A, B: side
- 100: battery system
- 101: battery management system
- 102: coolant provisioning device

## Claims

1. Device (1) for thermal management of battery cells (10) of a battery, comprising
a first component (2) and a second component (3), attached to each other, wherein the first component (2) is made of a first material and wherein the second component (3) is made of a second material, and wherein the second material is more flexible than the first material, and wherein
the first component (2) is adapted to provide a structural function for the device (1), and wherein
the second component (3) is adapted to provide a thermal function with at least one fluid channel (4).

2. Device (1) according to claim 1, wherein the first material comprises at least one metal and/or wherein the second material comprises at least one polymer.

3. Device according to one of the claims 1-2, wherein said device is provided in two shells (21, 22), attached to each other, preferably materially bonded, preferably via welding, preferably wherein the two shells (21, 22) are attached to each other in an area (B1, B2) of the first component (2) and in an area (B1, B2) of the second component (3).

4. Device according to one of the claims 1-3, wherein the first component (2) has a wall (30) for supporting one or more battery cells (10) and wherein the second component (3) has a wall (31) for touching a battery cell (10) at least in part, such that an increased fluid pressure of a fluid applied to the at least one fluid channel (4) increases thermal performance for thermal management.

5. Device according to one of the claims 1-4, wherein said at least one fluid channel (4, 4a, 4b) has a rectangular cross-section.

6. Device according to claim 3, wherein the second component (3) of a shell (21, 22) has a u-shaped cross section.

7. Device according to one of the claims 1-6, wherein at least two fluid channels (4) are provided via at least one divider (5) within the second component (3), preferably wherein said at least one divider (5) is arranged perpendicular to an axis of a battery cell (10).

8. Device according to claim 7, wherein said at least one divider (5) is arranged such to provide fluid channels (4a, 4b) having the same size of the cross-sectional area.

9. Device according to one of the claims 1-8, wherein a wall (30, 31) of said at least one fluid channel (4, 4a, 4b) to contact a battery cell (10) comprises at least one recess (6) facing away from the battery cell (10), preferably a plurality of recesses (6), preferably wherein said at least one recess (6) extends at least in part along said at least one fluid channel (4, 4a, 4b), preferably wherein a plurality of recesses (6) are positioned above each other parallel to the axis of the battery cell (10).

10. Device according to one of the claims 1-9, wherein said device (1) provides at least one, preferably a plurality of mounting seats (41), for a side surface of a battery cell (10) along the main direction of extension (40) of the battery cell (10).

11. Device according to claim 10, wherein said at least one mounting seat (41) is shaped such that said mounting seat (41) covers at least 20%, preferably at least 30%, preferably at least 40%, preferably at least 50%, preferably at least 60%, preferably at least 70%, preferably at least 80%, preferably at least 90%, preferably all of a circumferential surface of a battery cell (10) when placed in said mounting seat (41).

12. Device according to one of the claims 1-11, wherein said device comprises curved walls (30, 31) extending along the at least one direction, preferably wherein said curved walls (30, 31) have concave form, in particular having a regular pattern (50) of concave sections along the main direction of extension (40).

13. Device according to claim 12, wherein sides (A, B) of said device opposite to each other along the main direction of extension (40) have concave sections displaced from one another.

14. Battery comprising a plurality of battery cells (10) and at least a device according to one of the claims 1-13.

15. Battery system (100), comprising a battery according to claim 14 and a battery management system (101), said battery management system (101) being adapted to control provisioning of a coolant or heating fluid via a coolant provisioning device (102) for the device, preferably based on a temperature of the battery.
